# EUROPÄISCHE PATENTANMELDUNG

(11) **EP 1 669 326 A1**
(43) Veröffentlichungstag der Anmeldung: **14.06.2006**
(21) Anmeldenummer: 05026791.3
(22) Anmeldetag: 08.12.2005
(51) Int. Cl.: C02F 3/06, C02F 3/10

(54) **Verfahren und Vorrichtung zum Reinigen von organische Substanzen enthaltenden Abwässern**

(30) Priorität: 11.12.2004 DE 102004059756
(71) Anmelder: RHEBAU Rheinische Beton- und Bauindustrie GmbH & Co., 41541 Dormagen (DE)
(72) Erfinder: Jungen, Christoph, 41515 Grevenbroich (DE)
(74) Vertreter: Hauck, Graalfs, Wehnert, Döring, Siemons

(57) **Zusammenfassung**

Es werden ein Verfahren und eine Vorrichtung zum Reinigen von organische Substanzen, insbesondere Benzin, Ö1 und/oder Fett, enthaltenden Abwässern beschrieben. Bei dem Verfahren und der Vorrichtung finden Mikroorganismen, die die im Abwasser enthaltenen organischen Substanzen abbauen, Verwendung. Eine diese Mikroorganismen enthaltende Substanz wird mit dem zu reinigenden Abwasser in Kontakt gebracht, und die durch den Abbau gebildeten wasserlöslichen bzw. wassermischbaren Substanzen werden mit dem gereinigten Abwasser abgeführt. Auf diese Weise wird das Entstehen von aufschwimmenden Schichten aus den organischen Substanzen, insbesondere sich verhärtenden Fettschichten, vermieden.

## Beschreibung

Die vorliegende Erfindung betrifft ein Verfahren zum Reinigen von organische Substanzen, insbesondere Benzin, Öl und/oder Fett, enthaltenden Abwässern.

Um Benzin und/oder Öl enthaltende Abwässer zu reinigen, werden diese sogenannten Leichtflüssigkeitsabscheidern zugeführt, in denen eine mechanische Abscheidung der leichteren Bestandteile (Benzin, Öl) infolge des geringeren spezifischen Gewichtes gegenüber dem von Wasser stattfindet. Dabei steigt das Benzin und/oder Öl im Abscheider nach oben und wird periodisch abgepumpt oder in entsprechende Speicher gedrückt.

Zum Abscheiden von Fetten aus Abwässern werden Fettabscheider verwendet, die auf einem entsprechenden Abscheideprinzip beruhen wie Leichtflüssigkeitsabscheider. Im Abscheider steigen die Fett- oder Ölpartikel nach oben und bilden eine auf dem Abwasser schwimmende Schicht, die periodisch aus dem Abscheider entfernt wird. Der Gesetzgeber schreibt vor, daß die Entfernung des abgeschiedenen Fettes bzw. Öles regelmäßig alle vier Wochen bis drei Monate erfolgen muß.

Es ist ferner generell bekannt, Ölrückstände im Boden durch Mikroorganismen zu beseitigen. Hierzu werden beispielsweise Hefen (Candida-Arten) und Bakterien (Arten von Corynebacteriaceae (Pseudomonas)) eingesetzt, die das Öl aufnehmen und verstoffwechseln können.

Die vorstehend beschriebenen Abscheider (Leichtflüssigkeitsabscheider, Fettabscheider) funktionieren gut und bewirken eine Entfernung der organischen Substanzen aus dem Abwasser, das in den Kanal geleitet oder einer nachgeschalteten Kläranlage zugeführt werden kann. Die Abscheider haben jedoch den Nachteil, daß die abgeschiedenen Substanzen regelmäßig aus den Abscheidern entfernt und entsorgt werden müssen. Dies ist insbesondere bei Fettabscheidern mit einem beträchtlichen Aufwand verbunden, da hier die Entsorgung des abgeschiedenen Fettes/Öles in relativ kurzen Zeiträumen erfolgen muß, wie vorstehend ausgeführt. Dabei wird die sich im Abscheider gebildete Fett/Ölschicht in der Regel von Spezialfirmen abgesaugt und danach einer Entsorgung zugeführt, was mit beträchtlichen Kosten für den Betreiber des Abscheiders verbunden ist.

Der vorliegenden Erfindung liegt die Aufgabe zugrunde, ein Verfahren zum Reinigen von organische Substanzen, insbesondere Benzin, Öl und/oder Fett, enthaltenden Abwässern zu schaffen, das besonders einfach und kostengünstig durchgeführt werden kann.

Diese Aufgabe wird erfindungsgemäß durch ein Verfahren zum Reinigen von organische Substanzen enthaltenden Abwässern gelöst, das die folgenden Schritte aufweist:
a. Einleiten des Abwassers in ein Behältnis;
b. Inkontaktbringen einer Mikroorganismen, die die im Abwasser enthaltenen organischen Substanzen abbauen, enthaltenden oder hieraus bestehenden Substanz mit dem im Behältnis befindlichen Abwasser;
c. Einwirkenlassen der die Mikroorganismen enthaltenden Substanz auf das Abwasser; und
d. Abführen des gereinigten Abwassers aus dem Behältnis.

Das erfindungsgemäße Verfahren macht von der Tatsache Gebrauch, daß bestimmte Mikroorganismen, wie Pilze, Hefen, Enzyme, Bakterien, organische Substanzen, insbesondere Kohlenwasserstoffe, abbauen und verstoffwechseln können. Mit "Abbauen" ist hiermit gemeint, daß die organischen Substanzen überwiegend in wasserlösliche unschädliche Verbindungen überführt werden, die zusammen mit dem gereinigten Abwasser in das Kanalnetz abgegeben oder einer nachfolgenden Abwasserreinigungsstufe, wie sie beispielsweise durch eine übliche Kläranlage realisiert wird, zugeführt werden kann. Desweiteren können beim Abbau der organischen Substanzen feste Bestandteile entstehen, die sich in der Form eines Schlammes am Boden des Behältnisses absetzen können. Diese festen Bestandteile, die in relativ geringen Mengen anfallen können, können in relativ großen Zeitabständen entsorgt werden oder vom gereinigten Abwasser mitgeführt und beispielsweise einer nachgeschalteten Kläranlage zugeführt werden.

Das erfindungsgemäße Verfahren weicht somit vom Prinzip des reinen Schwerkraftabscheiders ab und sieht statt dessen oder in Kombination damit das Einwirken von Mikroorganismen auf das Abwasser in einem Behältnis vor, wobei dieses Behältnis einen herkömmlichen Schwerkraftabscheider (Leichtflüssigkeitsabscheider, Fettabscheider) ersetzen kann. Da die eingesetzten Mikroorganismen die im Abwasser enthaltenen organischen Substanzen zumindest teilweise abbauen und in unschädliche wasserlösliche bzw. mit Wasser mischbare Verbindungen überführen, müssen die verwendeten Behältnisse nur in wesentlich größeren Zeiträumen gewartet werden, da sich überhaupt keine oder nur geringe Fett/Ölschichten ausbilden, die entsprechend entsorgt werden müssen. Damit läßt sich ein derartiges Verfahren wesentlich kostengünstiger betreiben als herkömmliche Verfahren.

Wie erwähnt, ist es grundsätzlich bekannt, Ölrückstände durch die Einwirkung von Mikroorganismen zu beseitigen. Hiervon wird bei der Verunreinigung von Böden mit Ölen etc. Gebrauch gemacht. Soweit dem Anmelder bekannt, ist es jedoch nicht bekannt, derartige Mikroorganismen bei der Abwasserreinigung zur Entfernung von organischen Substanzen aus dem Abwasser einzusetzen, und zwar insbesondere anstelle von Leichtflüssigkeitsabscheidern oder Fettabscheidern oder in Kombination hiermit.

Bei dem erfindungsgemäßen Verfahren wird die die Mikroorganismen enthaltende Substanz in einem Behältnis mit dem zu reinigenden Abwasser in Kontakt gebracht und dann über einen bestimmten Zeitrum auf das Abwasser einwirken gelassen. Die Mikroorganismen führen dann den entsprechenden Abbau bzw. die entsprechende Zersetzung der organischen Substanzen (Kohlenwasserstoffe) durch, wobei unschädliche wasserlösliche bzw. wassermischbare Substanzen entstehen, die zusammen mit dem gereinigten Abwasser aus dem Behältnis abgeführt werden.

Als Mikroorganismen können erfindungsgemäß vorwiegend Pilze, Enzyme, Hefen und Bakterien eingesetzt werden. Beispielsweise gelangen zum Einsatz: Penicilium cyclopium, Candida antarctica, Rhizomucor miehei, Pseudomonas sp., Acinetobacter sp. Diese Aufzählung ist rein beispielhaft. Die entsprechenden Mikroorganismen können in Abhängigkeit von der Art des zu reinigenden Abwassers empirisch ermittelt werden, wobei das Ziel sein sollte, solche Mikroorganismen einzusetzen, die für eine beständige Abwasserreinigung über einen großen Zeitraum sorgen und nicht in relativ kurzen Zeiträumen erneuert werden müssen. Natürlich deckt die Erfindung aber auch solche Fälle ab, bei denen neue Mikroorganismen in bestimmten Zeiträumen zugeführt werden müssen.

Die Ausgestaltung des erfindungsgemäßen Verfahrens hängt weitgehend von den Lebensbedingungen der eingesetzten Mikroorganismen ab. So sieht eine erste Ausführungsform des erfindungsgemäßen Verfahrens vor, daß die die Mikroorganismen enthaltende Substanz mit dem Abwasser vermischt wird. Hier kann ein einmaliges Vermischen am Anfang, ein Vermischen in bestimmten Zeitabständen oder ein kontinuierliches Vermischen erfolgen, um auf diese Weise eine optimale Aktivität der Mikroorganismen zu erreichen. Bei einer anderen bevorzugten Ausführungsform wird die die Mikroorganismen enthaltende Substanz mit der Oberfläche des Abwasser kontaktiert. Bei dieser Ausführungsform wird davon ausgegangen, daß die leichteren organischen Substanzen (Kohlenwasserstoffe) nach oben steigen, so daß die Mikroorganismen gezielt an dieser Stelle mit den sich dort ansammelnden organischen Substanzen kontaktiert werden.

Um die Bedingungen weiter zu optimieren, wird das Abwasser vorzugsweise im Behältnis umgewälzt oder von oben oder unten belüftet. Eine Belüftung ist insbesondere dann erforderlich, wenn die eingesetzten Mikroorganismen Sauerstoff benötigen. Durch das Umwälzen des Abwassers wird vorzugsweise der Kontakt zwischen Abwasser und Mikroorganismen verbessert.

In Weiterbildung des erfindungsgemäßen Verfahrens werden in oder auf dem Abwasser im Behältnis Ansiedlungsflächen für die Mikroorganismen vorgesehen. Zur Schaffung von derartigen Ansiedlungsflächen werden vorzugsweise Trägerkörper im Behältnis fest installiert oder schwimmend auf dem Abwasser angeordnet. Solche Trägerkörper zeichnen sich vorzugsweise durch eine hohe spezifische Oberfläche aus, um den Mikroorganismen eine möglichst große Ansiedlungsfläche zu vermitteln. So wird vorzugsweise eine Trägerkörperschicht schwimmend auf dem Abwasser angeordnet und mit Mikroorganismen besiedelt, um in diesem Bereich ein direktes Einwirken der Mikroorganismen auf die dort angesammelten organischen Substanzen zu ermöglichen.

Vorzugsweise wird das im Behältnis befindliche Abwasser vor Beginn der Reinigung mit der die Mikroorganismen enthaltenden Substanz geimpft. Es wird dabei davon ausgegangen, daß die auf diese Weise eingebrachte Starterkultur über einen relativ langen Zeitraum aktiv ist bzw. sich die entsprechenden Mikroorganismen vermehren, so daß ein nachträgliches Impfen nicht mehr oder nur in Abständen von relativ großen Zeiträumen erforderlich ist.

Wichtig ist, daß die die Mikroorganismen enthaltende Substanz so eingeführt und/oder das gereinigte Abwasser so abgeführt wird, daß die Mikroorganismen nicht mit aus dem Behältnis abgezogen werden. Dies kann beispielsweise so bewerkstelligt werden, daß die Abführung des gereinigten Abwassers aus dem Behältnis über Tauchrohre oder hinter Tauchwänden erfolgt, während die Mikroorganismen im oberen Bereich des Behältnisses aktiv bzw. dort angesiedelt sind.

Eine weitere Verfahrensvariante sieht vor, daß das Abwasser mehrfach mit einem die Substanz enthaltenden Bereich im Behältnis kontaktiert wird. Hierbei kann das Abwasser beispielsweise mehrfach durch einen mit Trägermaterialien bzw. Trägerkörpern für die Mikroorganismen versehenen Bereich umgewälzt werden, um mehrfach mit den Mikroorganismen in Kontakt gebracht zu werden.

Um ein Entweichen der Mikroorganismen aus dem Behältnis zu verhindern, kann das gereinigte Abwasser durch ein die Mikroorganismen zurückhaltendes Filtermaterial aus dem Behältnis abgeführt werden. Hier kann beispielsweise ein geeignetes Faservlies zum Einsatz gelangen.

Ein weiterer Vorteil des erfindungsgemäßen Verfahrens besteht darin, daß hiermit generell die Ansammlung von Schichten aus organischen Substanzen in Abscheidern bzw. Behältnissen vermieden oder stark eingeschränkt wird, wodurch das Entstehen von aus derartigen Ansammlungen resultierenden aggressiven Produkten, wie Fettsäuren, verhindert wird, die die Abscheider- bzw. Behältniskonstruktion angreifen, beispielsweise die Beschichtungen, den Betonmantel etc. derselben. Durch das erfindungsgemäße Verfahren wird daher die Lebensdauer von derartigen Behältnissen bzw. Abscheidern verlängert.

Die Erfindung betrifft ferner eine Vorrichtung zur Durchführung des vorstehend beschriebenen Verfahrens. Diese Vorrichtung ist dadurch gekennzeichnet, daß sie ein Behältnis zur Aufnahme des zu reinigenden Abwassers, einen Abwasserzulauf, einen Ablauf für das gereinigte Abwasser und eine Zuführeinrichtung für die die Mikroorganismen enthaltende Substanz aufweist. Bei der Zuführeinrichtung für die die Mikroorganismen enthaltende Substanz kann es sich um einen Zulauf handeln, wenn es sich bei der Substanz um eine Flüssigkeit handelt, oder um eine Einführeinrichtung für einen Feststoff, wenn die Substanz fest ist. Die Zuführeinrichtung kann kontinuierlich oder periodisch arbeiten.

In Weiterbildung der Erfindung weist die Vorrichtung eine Umwälzeinrichtung für das zu reinigende Abwasser auf. Hierbei kann es sich beispielsweise um eine geeignete Pumpe handeln, mit der das die Substanz enthaltende Abwasser insgesamt umgewälzt oder das Abwasser so umgewälzt wird, daß es mit der Substanz und damit mit den Mikroorganismen in Kontakt tritt. Ferner kann die Vorrichtung eine geeignete Agitationeinrichtung aufweisen, beispielsweise einen Rührer, Propeller etc.

Vorzugsweise weist die Vorrichtung eine Belüftungseinrichtung auf, um die Mikroorganismen mit Sauerstoff zu versorgen, falls sie diesen benötigen (aerobes Milieu). Die Belüftungseinrichtung kann dabei eine Belüftung von oben, von unten oder von der Seite durchführen. Entsprechende Einrichtungen sind bekannt und können übernommen werden.

In Weiterbildung besitzt die Vorrichtung mindestens eine Ansiedlungsfläche für die Mikroorganismen. Hierbei kann es sich um fest installierte oder um schwimmende Trägermaterialien oder Trägerkörper handeln. Die Trägerkörper bzw. Materialien sind dabei vorzugsweise so angeordnet, daß sie vom zu reinigenden Abwasser durchströmt werden können, und weisen eine besonders große spezifische Oberfläche auf. Geeignete Trägermaterialien sind beispielsweise Lavabrocken.

Der Abwasserablauf besitzt zweckmäßigerweise ein Tauchrohr oder eine Tauchwand, um ein Entweichen der Mikroorganismen mit dem abgeführten gereinigten Abwasser zu verhindern. Hierbei bietet es sich an, die Mikroorganismen (Trägerkörper, Trägermaterialien) im oberen Bereich des Behältnisses anzuordnen, damit ein Abführen derselben verhindert wird.

Bei einer speziellen Ausführungsform einer Vorrichtung hat das Behältnis einen abgetrennten, Mikroorganismen enthaltenden Bereich, einen von Mikroorganismen freien Abwasserbereich und eine Umwälzeinrichtung zum Umwälzen des Abwassers durch den Mikroorganismen enthaltenden Bereich. Das zu reinigende Abwasser wird hierbei vorzugsweise direkt in den Mikroorganismen enthaltenden Bereich eingeführt, durch diesen Bereich umgewälzt und in den von Mikroorganismen freien Abwasserbereich geführt und von dort wieder durch den Mikroorganismen enthaltenden Bereich umgewälzt. Hierdurch wird das Abwasser eine Vielzahl von Malen mit den Mikroorganismen in Kontakt gebracht, bevor es das Behältnis verläßt. Der die Mikroorganismen enthaltende Bereich kann vorzugsweise in der Mitte des Behältnisses angeordnet und vom Abwasserbereich umgeben sein.

Die Vorrichtung kann ferner einen dem Abwasserablauf vorgeschalteten Filter für die Mikroorganismen besitzen, um eine Mitführung von Mikroorganismen mit dem gereinigten Abwasser zu vermeiden.

Die erfindungsgemäße Vorrichtung wird nachfolgend anhand von Ausführungsbeispielen in Verbindung mit der Zeichnung im einzelnen beschrieben. Es zeigen:
- Figur 1: einen schematischen Vertikalschnitt durch eine erste Ausführungsform einer Vorrichtung zum Reinigen von organische Substanzen enthaltenden Abwässern;
- Figur 2: einen schematischen Vertikalschnitt durch eine zweite Ausführungsform einer derartigen Vorrichtung;
- Figur 3: einen schematischen Vertikalschnitt durch eine dritte Ausführungsform einer derartigen Vorrichtung; und
- Figur 4: einen schematischen Vertikalschnitt durch eine vierte Ausführungsform einer derartigen Vorrichtung.

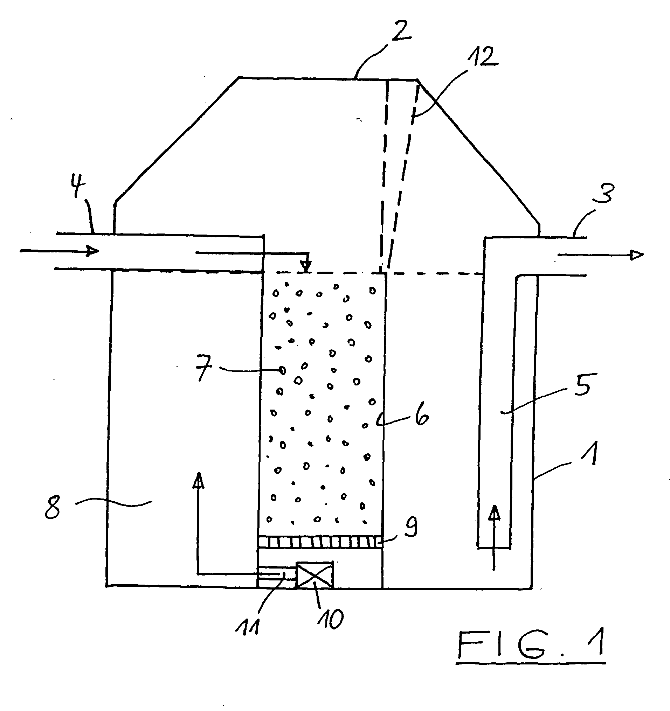

Die in Figur 1 schematisch im Längsschnitt dargestellte Vorrichtung zum Reinigen von organische Substanzen enthaltenden Abwässern besitzt ein zylinderförmig ausgebildetes Behältnis 1 mit einem kegelstumpfförmig ausgebildeten oberen Bereich, der von einem Deckel 2 geschlossen wird. Der Deckel ist abnehmbar und ermöglicht einen Zugriff auf die im Behältnis angeordneten Bestandteile.

In der Figur links befindet sich ein Zulauf 4 für das zu reinigende Abwasser, während sich rechts ein Ablauf 3 für das gereinigte Abwasser befindet, dem ein Tauchrohr 5 vorgeschaltet ist, das in den unteren Bereich des Behältnisses mündet. Mittig im Behältnis ist ein abgetrennter, etwa zylindrischer Bereich vorgesehen, der mit eine Vielzahl von Trägerkörpern 7 gefüllt ist, welche eine lose Schüttung bilden, so daß das Abwasser die aus den Trägerkörpern gebildete Säule von oben nach unten durchdringen kann. Bei den Trägerkörpern 7 kann es sich beispielsweise um Lavabrocken handeln. Im unteren Teil des Bereiches 6 befindet sich eine Lochplatte 9, die das Hindurchtreten von Flüssigkeiten ermöglicht, jedoch die Trägerkörper 7 zurückhält. Unter der Lochplatte ist eine Pumpe 10 mit einem Ablaufrohr 11 angeordnet, das in den den mittleren Bereich umgebenden Bereich 8 des Behältnisses mündet.

Die im mittleren Bereich 6 angeordneten Trägerkörper 7 stellen Ansiedlungsflächen für Mikroorganismen dar, die die im zu reinigenden Abwasser enthaltenen organischen Substanzen zu unschädlichen wasserlöslichen oder wassermischbaren Verbindungen abbauen. Als Mikroorganismen können die im allgemeinen Beschreibungsteil aufgeführten Organismen Verwendung finden. Diese werden vor Inbetriebnahme der Vorrichtung auf die Trägerkörper 7 aufgebracht, wobei beispielsweise nach dem Füllen des Behältnisses mit zu reinigendem Abwasser eine flüssige, die Mikroorganismen enthaltende Substanz bei 12 von der Oberseite des Behältnisses her in den mittleren Bereich 6 eingeführt wird. Diese Mikroorganismen siedeln sich auf den einzelnen Trägerkörpern an. Nach einer bestimmten Zeitdauer, in der dieser Ansiedlungsprozeß stattgefunden hat, wird die Vorrichtung in Betrieb genommen, indem die Umwälzpumpe 10 eingeschaltet wird. Diese zieht das im mittleren Bereich 6 befindliche Abwasser durch die Lochplatte 9 und gibt dieses über das Rohr 11 in den äußeren Abwasserbereich 8 ab. Fließt nunmehr neues zu reinigendes Abwasser über den Zulauf 4 zu, wird das im äußeren Bereich befindliche Abwasser 8 über die Oberkante der Trennwand wieder in den mittleren Bereich 6 gedrückt und mit der Pumpe 10 umgewälzt, so daß das Abwasser mehrfach den mittleren Bereich mit den Trägerkörpern 7 passiert und eine entsprechende Einwirkung der Mikroorganismen auf das Abwasser erfolgen kann. Gereinigtes Abwasser verläßt das Behältnis 1 über das Tauchrohr 5 und gelangt über den Ablauf 3 beispielsweise in eine nachgeschaltete Kläranlage, in der ein normaler Klärprozeß stattfinden kann.

Die von den Mikroorganismen erzeugten wasserlöslichen bzw. wassermischbaren Substanzen, die aus dem Abbau der Kohlenwasserstoffe resultieren, gelangen mit dem gereinigten Abwasser über den Ablauf 3 in die nachfolgende Kläranlage. Der anfallende Schlamm kann in entsprechend großen Zeitabständen aus dem Behältnis entfernt werden.

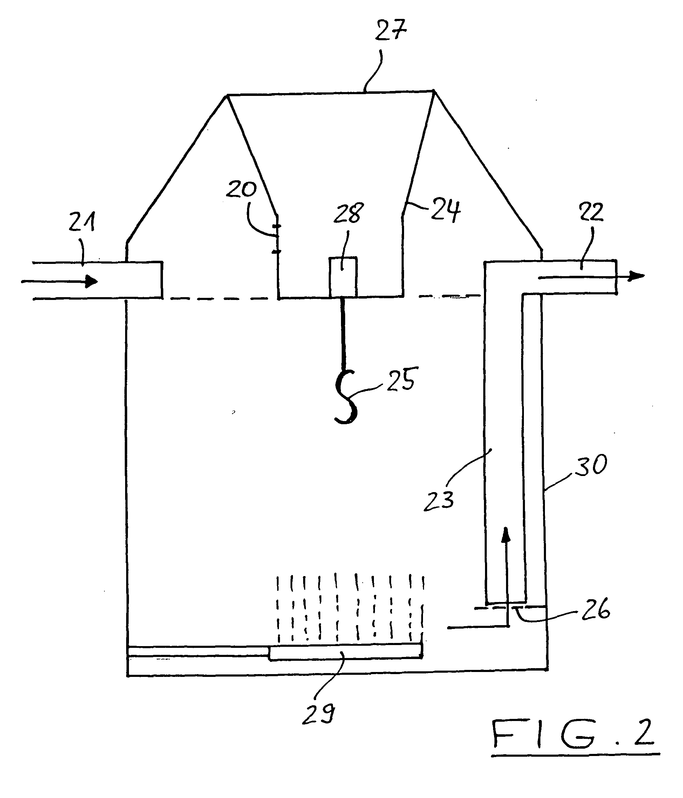

Die in Figur 2 gezeigte Ausführungsform einer Vorrichtung zum Reinigen von organische Substanzen enthaltenden Abwässern besitzt ein entsprechendes Behältnis 30 wie die Vorrichtung der Figur 1. Sie hat ferner einen Zulauf 21 für das zu reinigende Abwasser und einen Ablauf 22 für das gereinigte Abwasser, der mit einem Tauchrohr 23 sich bis in den unteren Bereich des Behältnisses 30 erstreckt. Die Mündung des Tauchrohres 23 ist mit einem Filtervlies 26 versehen, das das abgeführte gereinigte Abwasser filtert.

Unterhalb des Behälterdeckels 27 befindet sich ein Einhängekorb, in dem ein Motor 28 für ein sich in das Behältnis hineinerstreckendes Rührwerk 25 angeordnet ist.

Im Betrieb der Vorrichtung wird das Behältnis 30 mit zu reinigendem Abwasser über den Zulauf 21 gefüllt. Es folgt dann die Zuführung einer Mikroorganismen enthaltenden Substanz, mit der das im Behältnis vorhandene Abwasser geimpft wird. Diese Substanz kann beispielsweise über eine geeignete Öffnung im Korb zugeführt werden. Durch Betätigung des Rührwerks 25 wird die die Mikroorganismen enthaltende Substanz innig mit dem Abwasser vermischt. Hierdurch können die Mikroorganismen die im Abwasser enthaltenen organischen Substanzen abbauen.

Durch den Zulauf von weiterem zu reinigenden Abwasser wird das sich im unteren Bereich des Behältnisses sammelnde gereinigte Abwasser durch das Tauchrohr 23 in den Ablauf 22 gedrückt und beispielsweise einer nachgeschalteten Kläranlage zugeführt. Das zugeführte Abwasser führt die durch den Abbau der organischen Substanzen erzeugten wasserlöslichen bzw. wassermischbaren Substanzen mit. Möglicher anfallender Schlamm wird periodisch entsorgt.

Der hier verwendete Begriff "organische Substanzen" soll in erster Linie die durch herkömmliche Abscheider (Benzinabscheider, Ölabscheider, Fettabscheider) abgeschiedenen Substanzen, wie Treibstoffe, Öle, Fette, umfassen. Dies schließt jedoch nicht aus, daß hiervon auch andere organische Substanzen umfaßt werden.

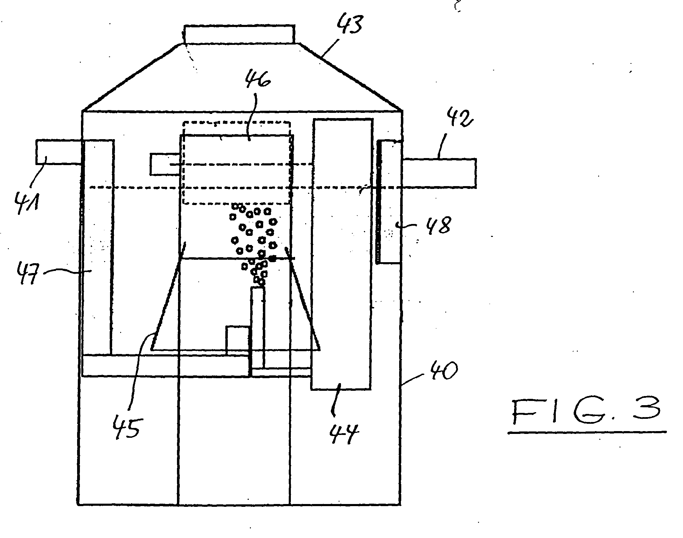

Figur 3 zeigt einen schematischen Vertikalschnitt durch eine dritte Ausführungsform einer erfindungsgemäß ausgebildeten Vorrichtung. Die Vorrichtung weist ein zylindrisches Behältnis 40 auf, das mit einem Deckel 43 versehen ist. Sie hat ferner einen Zulauf 41, der in ein nach unten in das Behältnis mündendes Tauchrohr 47 übergeht. Einem aus dem Behältnis 40 führenden Ablauf 42 ist ein sich nach unten in das Behältnis erstreckendes Tauchrohr 41 vorgeschaltet.

Im Inneren des Behältnisses befindet sich ein Auffangtrichter 45 zur Umgrenzung des Einwirkungsbereiches der Mikroorganismen auf das Abwasser. In den Auffangtrichter 45 mündet einerseits der Zulauf 41 über das Tauchrohr 48 und ein hiervon ausgehendes waagerechtes Rohr und andererseits eine Belüftungseinheit 44. Der Auffangtrichter 44 fängt die von der Belüftungseinheit abgegebene Luft auf. Oberhalb des Auffangtrichters 44 ist eine Mikroorganismen tragende Lamellenwalze 46 angeordnet, die im Betrieb rotiert und einen innigen Kontakt des Abwassers mit den Mikroorganismen bewirkt.

Im Betrieb wird das Behältnis 40 mit zu reinigendem Abwasser über den Zulauf 41 gefüllt. Das Abwasser gelangt in den Auffangtrichter 45. Durch Betätigung der Belüftungseinheit 44 und der Lamellenwalze 46 erfolgt eine entsprechende Umwälzung bzw. Agitation des Abwassers, wodurch eine innige Vermischung der Mikroorganismen bzw. der die Mikroorganismen enthaltenden Substanz mit dem Abwasser erfolgt. Hierdurch können die Mikroorganismen die im Abwasser enthaltenen organischen Substanzen abbauen. Das gereinigte Abwasser wird über das Tauchrohr 41 in den Ablauf 42 gedrückt und beispielsweise einer nachgeschalteten Kläranlage zugeführt.

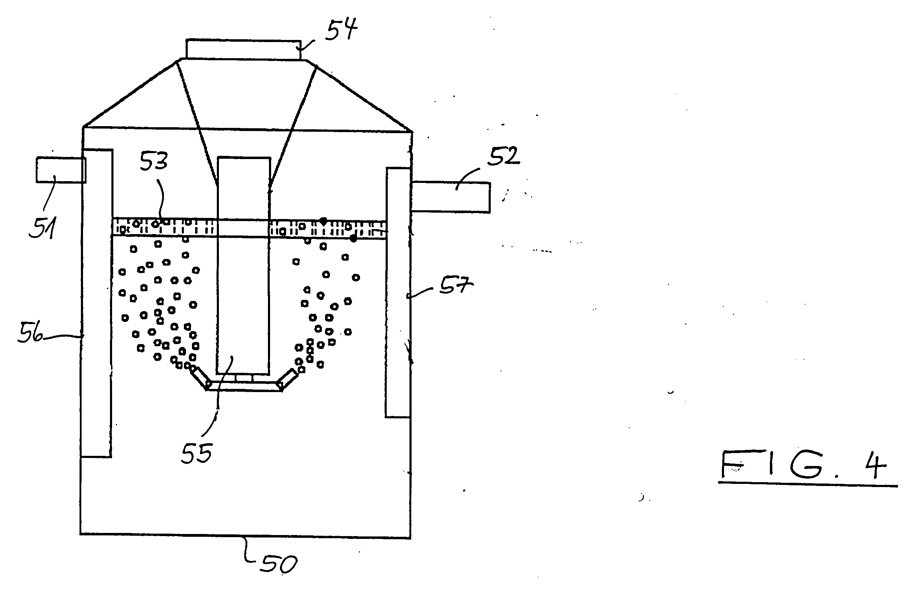

Figur 4 zeigt einen entsprechenden Vertikalschnitt wie Figur 3 bei einer anderen Ausführungsform. Das dargestellte, mit einem Deckel 54 versehene zylindrische Behältnis 50 hat einen Zulauf 51 mit nachgeschalteter Tauchwand 56 und einen Ablauf 52 mit vorgeschalteter Tauchwand 57. Im oberen Teil des Behältnisses 50 befindet sich eine Träger-Lochplatte 53, auf der ein Trägermaterial (nicht gezeigt) angeordnet ist, das Ansiedlungsflächen für Mikroorganismen aufweist. Schließlich ist im Inneren des Behältnisses 50 eine Belüftungseinheit 55 aufgehängt.

Im Betrieb wird das über den Zulauf 51 zugeführte, zu reinigende Abwasser im Behältnis durch Betätigung der Belüftungseinheit 55 belüftet und im Behältnis nach oben geführt. Es dringt durch die Träger-Lochplatte 53 und passiert das Trägermaterial mit den Mikroorganismen. Das gereinigte Abwasser wird dann über den Ablauf 52 abgeführt.

## Patentansprüche

1. Verfahren zum Reinigen von organische Substanzen, insbesondere Benzin, Öl und/oder Fett, enthaltenden Abwässern mit den folgenden Schritten:
a. Einleiten des Abwassers in ein Behältnis;
b. Inkontaktbringen einer Mikroorganismen, die die im Abwasser enthaltenen organischen Substanzen abbauen, enthaltenden oder hieraus bestehenden Substanz mit dem im Behältnis befindlichen Abwasser;
c. Einwirkenlassen der die Mikroorganismen enthaltenden Substanz auf das Abwasser; und
d. Abführen des gereinigten Abwassers aus dem Behältnis.

2. Verfahren nach Anspruch 1, **dadurch gekennzeichnet, daß** die Substanz mit dem Abwasser vermischt wird.

3. Verfahren nach Anspruch 1, **dadurch gekennzeichnet, daß** die Substanz mit der Oberfläche des Abwassers kontaktiert wird.

4. Verfahren nach einem der vorangehenden Ansprüche, **dadurch gekennzeichnet, daß** das Abwasser im Behältnis umgewälzt wird.

5. Verfahren nach einem der vorangehenden Ansprüche, **dadurch gekennzeichnet, daß** das Abwasser im Behältnis von oben oder unten belüftet wird.

6. Verfahren nach einem der vorangehenden Ansprüche, **dadurch gekennzeichnet, daß** in oder auf dem Abwasser im Behältnis Ansiedlungsflächen für die Mikroorganismen vorgesehen werden.

7. Verfahren nach Anspruch 6, **dadurch gekennzeichnet, daß** zur Schaffung von Ansiedlungsflächen Trägerkörper im Behältnis fest installiert oder schwimmend auf dem Abwasser angeordnet werden.

8. Verfahren nach einem der vorangehenden Ansprüche, **dadurch gekennzeichnet, daß** das im Behältnis befindliche Abwasser vor Beginn der Reinigung mit der die Mikroorganismen enthaltenden Substanz geimpft wird.

9. Verfahren nach einem der vorangehenden Ansprüche, **dadurch gekennzeichnet, daß** die die Mikroorganismen enthaltende Substanz so eingeführt und/oder das gereinigte Abwasser so abgeführt wird, daß die Mikroorganismen nicht mit aus dem Behältnis abgezogen werden.

10. Verfahren nach einem der vorangehenden Ansprüche, **dadurch gekennzeichnet, daß** das Abwasser mehrfach mit einem die Substanz enthaltenden Bereich im Behältnis kontaktiert wird.

11. Verfahren nach einem der vorangehenden Ansprüche, **dadurch gekennzeichnet, daß** das gereinigte Abwasser durch ein die Mikroorganismen zurückhaltendes Filtermaterial aus dem Behältnis abgeführt wird.

12. Vorrichtung zur Durchführung des Verfahrens nach einem der vorangehenden Ansprüche, **dadurch gekennzeichnet, daß** sie ein Behältnis (1,30,40,50) zur Aufnahme des zu reinigenden Abwassers, einen Abwasserzulauf (4,21,41, 51), einen Ablauf(3,22,42,52) für das gereinigte Abwasser und eine Zu- führeinrichtung (12,20) für die die Mikroorganismen enthaltende Substanz aufweist.

13. Vorrichtung nach Anspruch 12, **dadurch gekennzeichnet, daß** sie eine Umwälzeinrichtung (10) für das zu reinigende Abwasser aufweist.

14. Vorrichtung nach Anspruch 12 oder 13, **dadurch gekennzeichnet, daß** sie eine Agitationseinrichtung (25,46) aufweist.

15. Vorrichtung nach einem der Ansprüche 12 - 14, **dadurch gekennzeichnet, daß** sie eine Belüftungseinrichtung (29,44,55) aufweist.

16. Vorrichtung nach einem der Ansprüche 12 - 15, **dadurch gekennzeichnet, daß** sie mindestens eine Ansiedlungsfläche für die Mikroorganismen aufweist.

17. Vorrichtung nach Anspruch 16, **dadurch gekennzeichnet, daß** die Ansiedlungsfläche von fest installierten oder schwimmenden Trägerkörpern (7) gebildet ist.

18. Vorrichtung nach einem der Ansprüche 12 - 17, **dadurch gekennzeichnet, daß** der Abwasserablauf (3,22) ein Tauchrohr (5,23,48) oder eine Tauchwand aufweist.

19. Vorrichtung nach einem der Ansprüche 12 - 18, **dadurch gekennzeichnet, daß** das Behältnis (1) einen abgetrennten, Mikroorganismen enthaltenden Bereich (6), einen von Mikroorganismen freien Abwasserbereich (8) und eine Umwälzeinrichtung (10) zum Umwälzen des Abwassers durch den Mikroorganismen enthaltenden Bereich (6) aufweist.

20. Vorrichtung nach einem der Ansprüche 12 - 19, **dadurch gekennzeichnet, daß** sie einen dem Abwasserablauf vorgeschalteten Filter (26) für die Mikroorganismen besitzt.

21. Vorrichtung nach einem der vorangehenden Ansprüche, **dadurch gekennzeichnet, daß** sie einen Auffangtrichter (45) zur Umgrenzung des Einwirkungsbereiches der Mikroorganismen auf das Abwasser besitzt.

22. Vorrichtung nach einem der vorangehenden Ansprüche, **dadurch gekennzeichnet, daß** sie eine Trägerlochplatte (53) für das die Mikroorganismen aufweisende Material besitzt.

23. Vorrichtung nach einem der vorangehenden Ansprüche, **dadurch gekennzeichnet, dass** sie eine die Mikroorganismen tragende Lamellenwalze (46) aufweist.
